# EUROPÄISCHE PATENTSCHRIFT

(11) **EP 1 063 166 B1**
(45) Veröffentlichungstag und Bekanntmachung des Hinweises auf die Patenterteilung: **16.04.2003**
(21) Anmeldenummer: 00111628.4
(22) Anmeldetag: 31.05.2000
(51) Int. Cl.: B64C 1/00, B64F 5/00

(54) **Verfahren und Vorrichtung zur Herstellung eines dreidimensionalen Grossbauteiles**
Method and apparatus for the manufacture of a three-dimensional large sized structure
Procédé et dispositif pour la fabrication d'un grand structure tridimensionnel

(30) Priorität: 26.06.1999 DE 19929471
(43) Veröffentlichungstag der Anmeldung: 27.12.2000
(73) Patentinhaber: Airbus Deutschland GmbH, 21129 Hamburg (DE)
(72) Erfinder: Lehmker, Joachim, Dipl.-Ing., 27616 Lunestedt (DE); Mühlnickel, Karl-H., Dipl.-Ing., 21635 Jork (DE); Stoewer, Udo-H., Dipl.-Ing., 28355 Bremen (DE); Vollmerhaus, Rüdiger, Dipl.-Ing., 21614 Buxtehude (DE)
(74) Vertreter: Hansmann, Dierk, Dipl.-Ing.

(56) Entgegenhaltungen:
- FR-A- 2 702 982
- FR-A- 2 788 743
- US-A- 2 374 894
- US-A- 4 259 776

## Beschreibung

Die Erfindung betrifft ein Verfahren und eine Vorrichtung zur Herstellung eines dreidimensionalen Großbauteiles, insbesondere eines tonnenförmig ausgebildeten Flugzeugrumpfes eines Großraumflugzeuges, wobei das Großbauteil aus zusammengefügten, schalenförmigen und vorzugsweise durch lasttragende Elemente wie Stringer und Spante verstärkten Bauteilen besteht und in seinem Innenraum ein oder mehrere plattenförmige Fußbodenroste aufweist, die sich in Längsrichtung des Großbauteiles sowie von einer seiner Seitenwandungen zur gegenüberliegenden Seitenwandung erstrecken, wobei ein mit einem Zentralträger zusammenwirkendes Fußbodenrost als Ausgangspunkt für die Montage der Bauteile verwendet wird, und wobei das als eine Sektion bezeichnete dreidimensionale Großbauteil aus mindestens zwei aneinander gereihten Teilsektionen mit Quernähten zusammengesetzt ist.

Der DE 34 38 584 A1 ist eine Vorrichtung für die Fertigung eines Flugzeugrumpfes zu entnehmen, wobei es derzeit üblich ist, zunächst großflächige gekrümmte Bauteile zu Rumpfsektionen zusammenzufügen. Diese Rumpfsektionen werden dann mittels eines automatisch arbeitenden Orbitalnietsystems sowie manueller Arbeit zu Flugzeugrumpfteilen zusammengefügt.

Eine solche Verbindungsstelle wird im Flugzeugbau als Quernaht bezeichnet. Das Orbitalnietsystem besteht im wesentlichen aus einer automatischen Nietmaschine, die auf einer ringförmig um den Flugzeugrumpf verlaufenden Maschinenführung angeordnet ist. Das gesamte Orbitalnietsystem ist in Flugzeuglängsrichtung (x-Achse) verschiebbar.

Bei der Herstellung von Flugzeugrümpfen ist es weiterhin bekannt, daß eine Montage der Baugruppen in steifen geometriebestimmenden Vorrichtungen nach dem Prinzip der Nullpositionierung aller Baugruppen in einem starren System erfolgt. Hierbei werden die angelieferten Einzelbaugruppen in Vorrichtungen abgelegt und an vorgegebenen Systempunkten mit einer sogenannten Nullabsteckung positioniert. Nachteilig ist, daß durch das Abstecken Abweichungen an den Trennstellen zwischen den Einzelbaugruppen entstehen können, die ausserhalb der zulässigen Toleranzgrenzen liegen. Hierbei ist ein Justieren der Einzelbaugruppen zur Gewährleistung der Gesamtgeometrie nicht möglich. Trotzdem ist bei kreisförmigen Rumpfquerschnitten, d. h. bei zylinderförmigen Rümpfen eine Montage möglich. Ist die untere Rumpfhälfte positioniert und genietet, so wird der Passagierboden eingelegt und mit den Spanten verbunden. Hierbei hält ein Hilfsträger (Präsentierrahmen) ohne Ausgleichsmöglichkeit zulässiger Geometrieabweichungen das Bauteil gegenüber dem Vorrichtungssystem in Position. Nicht korrigierbare Lageabweichungen der Fußbodenstruktur sind möglich. Abschließend wird die Montage der oberen Seiten- und Oberschalen durchgeführt, wobei die Positionierung über die bereits erwähnten festen Nullabsteckungen erfolgt.

In der US-A-2 374 894 ist ein Verfähren und eine Vorrichtung zur Montage von Flugzeugrümpfen beschrieben, wobei die Montageschritte eine ortsfeste Fixierung von Trägern in einer vorbestimmten zentralen Position einschließen. Diese Träger dienen zur Aufnahme eines Fußbodenrostes in einer vorbestimmten horizontalen Lage als Ausgangspunkt für die Montage von Seitenschalen an dem Fußbodenrost, d.h. für die Vernietung der Fußbodenstruktur mit den Seitenschalen. Ein Zentralträger als Montagevorrichtung zur Aufnahme des Fußbodenrostes ist nicht vorgesehen.

Der Erfindung liegt nun die Aufgabe zugrunde, ein Verfahren zur toleranzarmen Herstellung eines dreidimensionalen Großbauteiles der eingangs genannten Art zu schaffen, welches eine optimale Zugänglichkeit zum vorzugsweise automatischen Fügen von Längs- und Quernähten sicherstellt und welches eine Verlängerung bis hin zu einem fertiggestellten Großbauteil ohne zusätzliche Anpassung ermöglicht, beispielsweise bis hin zu einem Flugzeugrumpf.

Die Aufgabe wird erfindungsgemäß dadurch gelöst, daß zur Herstellung der ersten Teilsektion:
- auf der Oberfläche eines länglichen und mit seinen stirnseitigen Enden gelagerten Zentralträgers mindestens ein Fußbodenrost mit Hilfe von Spannelementen mechanisch fest aufgespannt wird, und
- um den Zentralträger herum die eine definierte Eigensteifigkeit aufweisenden schalenförmigen Bauteile mittels eines rechnergesteuerten Tragsystems nacheinander derart positioniert und anschließend mechanisch zusammengefügt werden, daß zuerst die einander gegenüberliegenden Seitenschalen mit dem bzw. den Fußbodenrosten mechanisch verbunden werden, und daß dann die Unterschale bzw. die Oberschale nacheinander an die Seitenschalen angefügt werden,
und daß an die fertiggestellte erste Teilsektion eine zweite in gleicher Weise gefertigte Teilsektion und an diese zweite Teilsektion gegebenfalls weitere benachbarte, in gleicher Weise gefertigte Teilsektionen mittels Quernähten bis zur Fertigstellung des Großbauteiles angefügt werden.

Ein wesentlicher Vorteil der Erfindung besteht darin, daß eine toleranzarme Montage beispielsweise einer Teilsektion derart ermöglicht wird, daß alle Montagegruppen zu dem Zentralträger positioniert werden, der als leicht und eigensteif gebauter Vorrichtungskörper anzusehen ist. Die Flugzeugbeplankung, vorrangig als schalenförmige Bauteile ausgebildet, wird an das bzw. an die von dem Zentralträger aufgenommenen Fußbodenroste montiert, wobei zuerst eine Montage der Seitenschalen und dann eine Montage der Unter- bzw. Oberschale erfolgt. Hierbei können zunächst die Seitenschalen reihenweise an die Fußbodenroste und anschließend die Unter- bzw. Oberschalen reihenweise an die Seitenschalen angefügt werden.

Weitere Ausgestaltungen des erfindungsgemäßen Verfahrens sind in den Unteransprüchen 2 bis 4 beschrieben.

Im Unteranspruch 5 ist eine Vorrichtung zur Durchführung des erfindungsgemäßen Verfahrens beansprucht.

Weiterbildungen der erfindungsgemäßen Vorrichtung sind in den Unteransprüchen 6 bis 11 beschrieben.

In der Zeichnung ist ein Ausführungsbeispiel einer Vorrichtung nach der Erfindung dargestellt, und zwar zeigt:
- Fig. 1: eine Vorderansicht der wesentlichen Elemente einer Vorrichtung zur Herstellung eines Flugzeugrumpfes in vier Teilbildern, die vier aufeinanderfolgende Herstellungsstufen wiedergeben,
- Fig. 2: eine Montagestation in Seitenansicht, und
- Fig. 3: die Montage eines dreidimensionalen Großbauteiles aus zwei aneinander gereihten Teilsektionen.

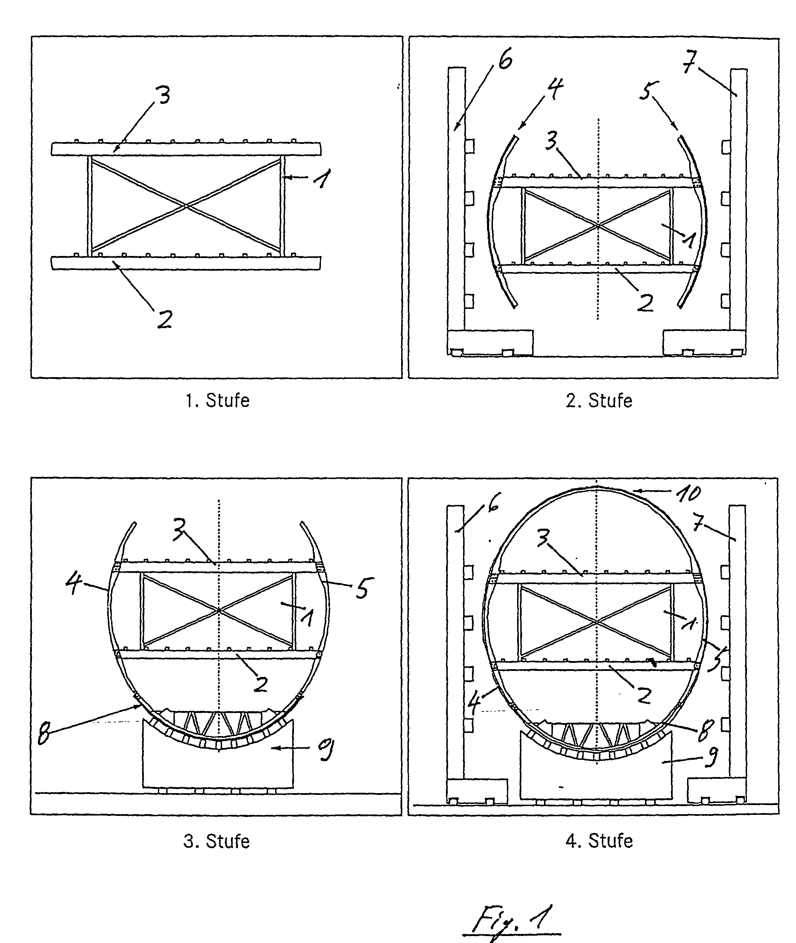

Die aus Fig. 1 ersichtliche erste Stufe zeigt einen Zentralträger 1 in Vorderansicht, der einen vorzugsweise rechteckförmigen Querschnitt aufweist. Auf der Ober- und Unterseite des Zentralträgers 1 ist jeweils ein Fußbodenrost 2 und 3, die zueinander parallel liegen, mittels zeichnerisch nicht dargestellter Spannelemente mechanisch befestigt. Die Spannelemente können in Z-Richtung des Flugzeugrumpfes verstellbar und von einem Rechner gesteuert sein, um in dieser Richtung auftretende Durchbiegungen des Zentralträgers 1 zu kompensieren und um hierdurch bedingte Maßabweichungen auszugleichen. Zur Ermittlung der Durchbiegungen bzw. der Maßabweichungen kann ein berührungsloses Meßsystem verwendet werden, welches auf der Lasertechnik basiert.

Die zweite Stufe aus Fig. 1 zeigt an den beiden Fußbodenrosten 2 und 3 mechanisch befestigte Seitenschalen 4 und 5, . die einander gegenüberliegen und somit Bauteile einer Flugzeugrumpfsektion darstellen. Die Seitenschalen 4 und 5 sind mit Hilfe von zwei, in Richtung des Zentralträgers 1 verfahrbare Hebezeugen 6 und 7 transportier- und positionierbar, die Bestandteile eines rechnergesteuerten Tragsystems zur Aufnahme, zum Transport und zur Positionierung aller Schalenbauteile sind.

Gemäß der in Fig. 1 dargestellten dritten Stufe ist eine Unterschale 8 an die beiden Seitenschalen 4 und 5 angefügt. Zur Aufnahme, zum Transport und zur Positionierung der Unterschale 8 unterhalb der Seitenschalen 4 und 5 dient das mit 9 bezeichnete verfahrbare Transportmittel, welches ebenfalls Bestandteil des rechnergesteuerten Tragsystems ist.

Die vierte Stufe von Fig. 1 zeigt, daß eine Oberschale 10 an die beiden Seitenschalen 4 und 5 angefügt ist. Zur Aufnahme, zum Transport und zur Positionierung dieser Oberschale 10 sind die Hebezeuge 6 und 7 des rechnergesteuerten Tragsystems vorgesehen.

Die obigen Ausführungen zeigen bereits, daß der Zentralträger 1, der auch tragende Funktionen für Versorgungsleitungen, Beleuchtung und als Werkzeugträger übernehmen kann, das Grundelement für die Montage eines Großbauteiles, vorzugsweise des Rumpfes eines Großraumflugzeuges bildet. Dabei ist es möglich, das Fußbodengerüst eines Frachtraumes, eines Passagierdecks oder beide Passagierdecks eines mehrstöckigen Rumpfes auf den Zentralträger 1 zu spannen. Der Zentralträger 1 wird an seinen stirnseitigen Enden derart gelagert, daß um ihn herum alle schalenförmigen und vorzugsweise durch lasttragende Elemente wie Stringer und Spante verstärkten Bauteile 4, 5, 8 und 10 montiert werden können. Die korrekte Lage dieser Bauteile zum Zentralträger 1 wird durch das rechnergesteuerte Tragsystem eingehalten, wobei eine Fluchtung aller am Zentralträger 1 montierten Seitenschalen 4, 5 und aller zu fügenden Unterschalen 8 und Oberschalen 10 mit Hilfe eines auf Lasertechnik basierenden berührungslosen Meßsystems und eines rechnergesteuerten Justagesystems erreicht wird. Hierdurch ist auch sichergestellt, daß die Trennstelle zwischen den Fußbodengerüsten 2 und 3 und den Seitenschalen 6 trotz äußerer Einflüsse toleranzarm gefügt werden kann.

Vorteilhafterweise entspricht die Außenkontur der schalenförmigen Bauteile 4, 5, 8 und 10 der theoretisch korrekten Lage zum System 0-Achse, zum Beispiel Zentralträger und Flugzeug. Die korrekte Geometrie der genannten Bauteile wird bereits im System Unterbaugruppe sichergestellt und durch die ausreichende Eigensteifigkeit der Bauteile in Verbindung mit dem rechnergesteuerten Tragsystem auch während der gesamten Montage eingehalten.

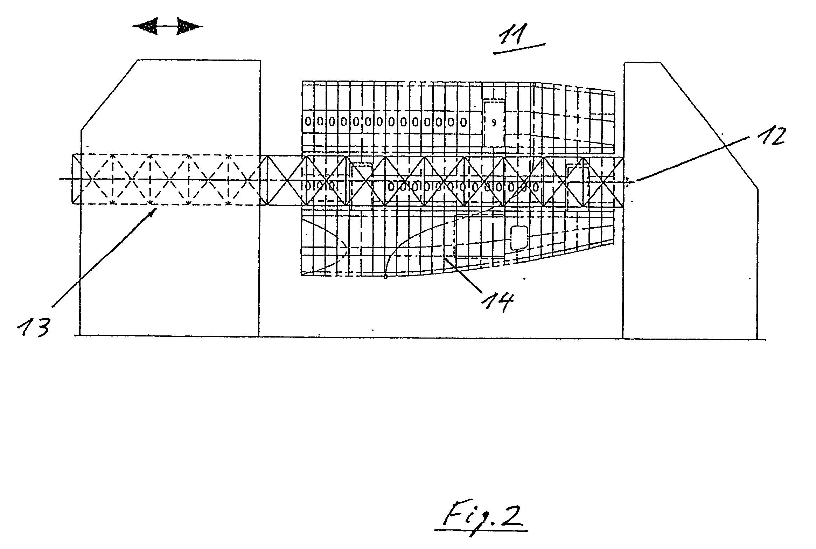

Die aus Fig. 2 ersichtliche Montagestation 11 weist eine Einspannvorrichtung 12 und eine Einspann- und Führungsvorrichtung 13 auf, in denen jeweils ein stirnseitiges Ende des Zentralträgers 1 gelagert ist. Die Montagestation 11 besitzt ein rechnergesteuertes Tragsystem zur Aufnahme, zum Transport und zur Positionierung der Schalenbauteile 4, 5, 8 und 10, wie es beispielsweise in Fig. 1 beschrieben ist. Um den Zentralträger 1 nach Fertigstellung eines Großbauteiles 14 aus diesem herausziehen zu können, wird zunächst das Großbauteil von einer weiteren zeichnerisch nicht dargestellten Tragvorrichtung aufgenommen. Anschließend werden die Spannelemente des Zentralträgers 1 gelöst und somit die Fußbodenroste 2 und 3 von dem Zentralträger 1 gelöst. Dann kann der Zentralträger 1 über die Führungsvorrichtung 13 aus dem Großbauteil 14 herausgezogen werden, wobei die in Z-Richtung verfahrbaren Spannelemente des Zentralträgers 1 einen für eine sichere Entnahme benötigten Freiraum des Zentralträgers 1 ermöglichen.

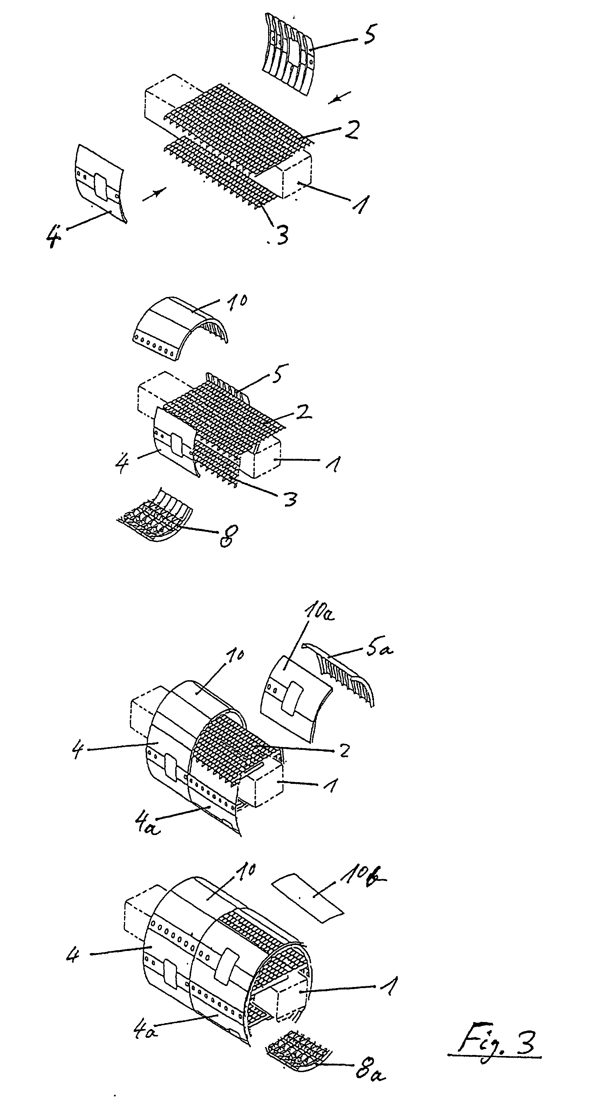

Aus Fig. 3 sind die einzelnen Verfahrensschritte zur Herstellung eines als eine Sektion bezeichneten dreidimensionalen Großbauteiles ersichtlich, welches aus mindestens zwei aneinander gereihten Teilsektionen mit Quernähten zusammengesetzt ist. Die einander gegenüberliegenden Seitenschalen 4 und 5 einer ersten Teilsektion werden positioniert und an dem bzw. den Fußbodenrosten 2 und 3 mechanisch befestigt. Dann werden zuerst die zugehörige Oberschale 10 der ersten Teilsektion und anschließend die zugehörige Unterschale 8 dieser Teilsektion an die beiden Seitenschalen 4 und 5 der ersten Teilsektion angefügt. An die fertiggestellte erste Teilsektion wird eine zweite in gleicher Weise gefertigte Teilsektion mit den Seitenschalen 4a und 5a, mit den Ober-Schalenteilen 10a und 10b sowie mit der Unterschale 8a angefügt. Eine dritte Teilsektion wird an die zweite Teilsektion in gleicher Weise angefügt, wobei weitere benachbarte, in gleicher Weise gefertigte Teilsektionen mittels Quernähten bis zur Fertigstellung des Großbaüteiles angefügt werden.

### Bezugszeichenliste

- 1: Zentralträger
- 2: Fußbodenrost
- 3: Fußbodenrost
- 4: Seitenschale
- 4a: Seitenschale einer zweiten Teilsektion
- 5: Seitenschale
- 5a: Seitenschale einer zweiten Teilsektion

- 6: Hebezeug
- 7: Hebezeug
- 8: Unterschale
- 8a: Unterschale einer zweiten Teilsektion
- 9: Transportmittel
- 10: Oberschale
- 10a: Oberschalenteil einer zweiten Teilsektion
- 10b: Oberschalenteil einer zweiten Teilsektion

- 11: Montagestation
- 12: Einspannvorrichtung
- 13: Einspann- und Führungsvorrichtung
- 14: Großbauteil

## Patentansprüche

1. Verfahren zur Herstellung eines dreidimensionalen Großbauteiles, insbesondere eines tonnenförmig ausgebildeten Flugzeugrumpfes eines Großraumflugzeuges (14), wobei das Großbauteil aus zusammengefügten, schalenförmigen und vorzugsweise durch lasttragende Elemente wie Stringer und Spante verstärkten Bauteilen (4,5,8,10) besteht und in seinem Innenraum ein oder mehrere plattenförmige Fußbodenroste (2,3) aufweist, die sich in Längsrichtung des Großbauteiles sowie von einer seiner Seitenwandungen zur gegenüberliegenden Seitenwandung erstrecken, wobei ein mit einem Zentralträger (1) zusammenwirkendes Fußbodenrost (2,3) als Ausgangspunkt für die Montage der Bauteile (4,5,8,10) verwendet wird, und wobei das als eine Sektion bezeichnete dreidimensionale Großbauteil aus mindestens zwei aneinander gereihten Teilsektionen mit Quernähten zusammengesetzt ist, **dadurch gekennzeichnet, daß** zur Herstellung der ersten Teilsektion:
- auf der Oberfläche eines länglichen und mit seinen stirnseitigen Enden gelagerten Zentralträgers (1) mindestens ein Fußbodenrost (2,3) mit Hilfe von Spanneleementen mechanisch fest aufgespannt wird, und
- um den Zentralträger (1) herum die eine definierte Eigensteifigkeit aufweisenden schalenförmigen Bauteile (4,5,8,10) mittels eines rechnergesteuerten Tragsystems (6,7,9) nacheinander derart positioniert und anschliessend mechanisch zusammengefügt werden, daß zuerst die einander gegenüberliegenden Seitenschalen (4,5) mit dem bzw. den Fußbodenrosten (2,3) mechanisch verbunden werden, und daß dann die Unterschale (8) bzw. die Oberschale (10) nacheinander an die Seitenschalen (4,5) angefügt werden,
und daß an die fertiggestellte erste Teilsektion eine zweite in gleicher Weise gefertigte Teilsektion und an diese zweite Teilsektion gegebenfalls weitere benachbarte, in gleicher Weise gefertigte Teilsektionen mittels Quernähten bis zur Fertigstellung des Großbauteiles (14) angefügt werden.

2. Verfahren nach Anspruch 1, **dadurch gekennzeichnet, daß** bei der Verwendung von zwei parallel zueinander angeordneten plattenförmigen Fußbodenrosten (2,3) jeweils ein Fußbodenrost (3) auf der Oberseite und das andere (2) auf der Unterseite eines einen rechteckigen Querschnitt aufweisenden Zentralträgers (1) aufgespannt werden.

3. Verfahren nach Anspruch 1 oder 2, **dadurch gekennzeichnet, daß** eine Fluchtung aller am Zentralträger (1) montierten Seitenschalen (4,5) und aller zu fügenden Unterschalen (8) und Oberschalen (10) mit Hilfe eines auf Lasertechnik basierenden berührungslosen Meßsystems und eines rechnergesteuerten Justagesystems erreicht wird.

4. Verfahren nach Anspruch 1, 2 oder 3, **dadurch gekennzeichnet, daß** das Großbauteil (14) nach seiner Fertigstellung von einer weiteren Tragvorrichtung aufgenommen wird, daß die Spannelemente des Zentralträgers (1) gelöst und somit das bzw. die Fußbodenroste (2,3) von dem Zentralträger (1) gelöst werden, und daß der Zentralträger (1) über Führungsmittel aus dem Großbauteil (14) herausgezogen wird.

5. Vorrichtung zur Durchführung des Verfahrens nach einem der Ansprüche 1 bis 4, wobei der als Grundelement zur Herstellung des Großbauteiles (14) dienende Zentralträger (1) mit seinen stirnseitigen Enden in einer Einspannvorrichtung (12) und in einer Einspann- und Führungsvorrichtung (13) einer Montagestation (11) gelagert ist, und daß die Montagestation (11) ein rechnergesteuertes Tragsystem zur Aufnahme, zum Transport und zur Positionierung der Schalenbauteile (4,5,8 und 10) aufweist.

6. Vorrichtung nach Anspruch 5, **dadurch gekennzeichnet, daß** das rechnergesteuerte Tragsystem (6,7,9) zur Aufnahme, zum Transport und zur Positionierung der Seitenschalen (4,5) zwei in Richtung des Zentralträgers (1) verfahrbare Hebezeuge (6,7) aufweist.

7. Vorrichtung nach Anspruch 6, **dadurch gekennzeichnet, daß** die Hebezeuge (6,7) auch zur Aufnahme, zum Transport und zur Positionierung der Oberschalen (10) dienen.

8. Vorrichtung nach Anspruch 5, **dadurch gekennzeichnet, daß** das rechnergesteuerte Tragsystem (6,7,9) zur Aufnahme, zum Transport und zur Positionierung der Unterschalen (8) ein in Richtung des Zentralträgers (1) verfahrbares Transportmittel (9) aufweist.

9. Vorrichtung nach Anspruch 5, 6 oder 8, **dadurch gekennzeichnet, daß** der Zentralträger (1) zur Kompensation von in Z-Richtung des Großbauteiles (14) auftretenden Durchbiegungen und zum Ausgleich von auftretenden Maßabweichungen verstellbare und von einem Rechner gesteuerte Spannelemente aufweist.

10. Vorrichtung nach Anspruch 9, **dadurch gekennzeichnet, daß** zur Ermittlung der Durchbiegungen des Zentralträgers (1) und der auftretenden Maßabweichungen ein auf Lasertechnik basierendes berührungsloses Meßsystem vorgesehen ist.

11. Vorrichtung nach einem der Ansprüche 5, 6, 7, 8, 9 oder 10, **dadurch gekennzeichnet, daß** der Zentralträger (1) tragende Funktionen für Versorgungsleitungen, Beleuchtung und als Werkzeugträger übernimmt.

## Claims

1. Method of manufacturing a large, three-dimensional component, in particular an aircraft fuselage of barrel-shaped construction for a giant aircraft (14) ; wherein the large component consists of components (4, 5, 8, 10) in shell form which have been joined together and preferably reinforced by load-bearing elements such as stringers and ribs, and has, in its interior space, one or more floor grids (2, 3) in plate form which extend in the longitudinal direction of the large component and also from one of its side walls to the opposite side wall; wherein a floor grid (2, 3) interacting with a central bearer (1) is used as the starting point for the assembly of the components (4, 5, 8, 10); and wherein the large, three-dimensional component, which is referred to as a "section", is put together from at least two partial sections which are arranged in a row and which have transverse seams, **characterised in that**, for manufacturing the first partial section:
- at least one floor grid (2, 3) is clamped fast mechanically, with the aid of clamping elements, onto the surface of an elongated central bearer (1) which is mounted by its end faces, and
- the components (4, 5, 8, 10) in shell form, which have a defined inherent stiffness, are so positioned, one after the other, round the central bearer (1) by means of a computer-controlled carrying system (6, 7, 9) and then joined together mechanically, that the mutually opposed lateral shells (4, 5) are first mechanically connected to the floor grid or grids (2, 3), and that the lower shell (8) and upper shell (10) are then attached one after the other to the said lateral shells (4, 5),
and that there are attached to the completed first partial section, by means of transverse seams, a second partial section which has been manufactured in the same way, and to the said second partial section, optionally, additional adjacent partial sections which have been manufactured in the same way, until the large component (14) has been completed.

2. Method according to claim 1, **characterised in that**, when use is made of two floor grids (2, 3) in plate form disposed parallel to one another, one floor grid (3) is clamped onto the upper side, and the other floor grid (2) onto the lower side, in each case, of a central bearer (1) having a rectangular cross-section.

3. Method according to claim 1 or 2, **characterised in that** alignment of all the lateral shells (4, 5) assembled on the central bearer (1) and of all the lower shells (8) and upper shells (10) to be attached is achieved with the aid of a non-contact measuring system based on laser technology and of a computer-controlled aligning system.

4. Method according to claim 1, 2 or 3, **characterised in that** the large component (14) is received, after its completion, by an additional carrying device, that the clamping elements of the central bearer (1) are detached and the floor grid or grids (2, 3) is/are thus detached from the said central bearer (1), and that the said central bearer (1) is withdrawn from the large component (14) via guide means.

5. Device for performing the method according to one of claims 1 to 4, wherein the central bearer (1) serving as the base element for manufacturing the large component (14) is mounted, by its end faces, in a clamping-in device (12) and in a clamping-in and guiding device (13) of an assembly station (11), and that the said assembly station (11) has a computer-controlled carrying system for receiving, transporting and positioning the shell components (4, 5, 8 and 10).

6. Device according to claim 5, **characterised in that** the computer-controlled carrying system (6, 7, 9) for receiving, transporting and positioning the lateral shells (4, 5) has two lifting appliances (6, 7) which are capable of travel in the direction of the central bearer (1).

7. Device according to claim 6, **characterised in that** the lifting appliances (6, 7) also serve for receiving, transporting and positioning the upper shells (10).

8. Device according to claim 5, **characterised in that** the computer-controlled carrying system (6, 7, 9) for receiving, transporting and positioning the lower shells (8) has a transport means (9) which is capable of travel in the direction of the central bearer (1).

9. Device according to claim 5, 6 or 8, **characterised in that** the central bearer (1) has adjustable, computer-controlled clamping elements for compensating for deflections which occur in the "Z" direction of the large component (14) and for offsetting dimensional deviations which occur.

10. Device according to claim 9, **characterised in that** a non-contact measuring system based on laser technology is provided for detecting the deflections of the central bearer (1) and the dimensional deviations which occur.

11. Device according to one of claims 5, 6, 7, 8, 9 or 10, **characterised in that** the central bearer (1) undertakes carrying functions for supply lines and lighting and as a tool-carrier.

## Revendications

1. Procédé pour la fabrication d'un grand structure tridimensionnel, et notamment d'un fuselage d'avion à gros tonnage (14) en barillet, le grand structure étant constitué d'éléments assemblés en forme de coque et de préférence de structures (4,5,8,10) renforcés par des éléments porte-charge comme des raidisseurs et des couples, et présentant, dans son espace intérieur, une ou plusieurs grille(s) de plancher en forme de panneaux s'étendant dans le sens longitudinal du grand structure, d'une de ses parois latérales vers la paroi latérale opposée, une grille de plancher ( 2, 3) solidaire d'un support central (1) étant utilisée comme point de départ pour l'assemblage des structures, et le grand structure tridimensionnel décrit comme une section étant composé d'au moins deux sections partielles avec joints transversaux disposées l'une derrière l'autre, et **caractérisé en ce que** pour produire la première section partielle :
- au moins une grille de plancher (2,3) est tendue mécaniquement et de manière rigide, à l'aide d'éléments de tension., sur la surface d'un support central (1) oblong et fixé par ses extrémités avant, et
- les structures (4,5,8,10) en forme de cuvette à rigidité propre définie sont disposés les uns derrière les autres tout autour du support central (1), à l'aide d'un système porteur (6,7,9) commandé par ordinateur, puis assemblés mécaniquement, **en ce que** les coques latérales (4,5) opposées les unes aux autres sont reliées mécaniquement avec le ou les grilles de plancher (2,3), et **en ce que** les coques inférieure (8) ou supérieure (10) sont ensuite assemblées l'une derrière l'autre contre les coques latérales (4,5),
et **en ce que** une deuxième section partielle produite de la même manière est assemblée contre la première section produite, d'autres sections partielles voisines produites de façon similaire étant assemblées, le cas échéant, contre cette deuxième section partielle à l'aide de joints transversaux, jusqu'à la fabrication du grand structure (14).

2. Procédé selon la revendication 1, **caractérisé en ce que** lors de l'utilisation de deux grilles de plancher (2,3) en forme de panneaux disposées parallèlement, une grille de plancher (3) est tendue sur le côté supérieur d'un support central (1) à section transversale rectangulaire, l'autre grille (2) étant tendue sur le côté inférieur d'un support central (1) à section transversale rectangulaire.

3. Procédé selon la revendication 1 ou 2, **caractérisé en ce que** un alignement de toutes les coques latérales (4,5) montées contre le support central (1) et de toutes les coques inférieures (8) et supérieures (10) à assembler est obtenu à l'aide d'un système de mesure sans contact basé sur une technologie laser et un système d'ajustement commandé par ordinateur.

4. Procédé selon la revendication 1, 2 ou 3, **caractérisé en ce que** le grand structure (14) est, après sa fabrication, reçu par un autre dispositif porteur, **en ce que** les éléments de tension du support central (1) est délié, la ou les grille(s) de plancher (2,3) étant ainsi déliée(s) du support central (1), et **en ce que** le support central (1) est extrait du grand structure (14) par l'intermédiaire de moyens de guidage.

5. Dispositif de réalisation du procédé selon une des revendications 1 à 4, le support central (1) servant d'élément de base pour la fabrication du grand structure (14) étant disposé avec ses extrémités frontales dans un dispositif de tension (12) et dans un dispositif de tension et de guidage (13) d'une station de montage (11), **caractérisé en ce que** la station de montage (11) présente un système porteur assisté par ordinateur et destiné à recevoir, transporter et placer les structures en coque (4,5,8 et 10).

6. Dispositif selon la revendication 5, **caractérisé en ce que** le système porteur (6,7,9) commandé par ordinateur et destiné à recevoir, transporter et placer les coques latérales (4,5) présente deux instruments de levage (6,7) déplaçables dans la direction du support central (1).

7. Dispositif selon la revendication 6, **caractérisé en ce que** les instruments de levage (6,7) servent également à recevoir, transporter et placer les coques supérieures (10).

8. Dispositif selon la revendication 5, **caractérisé en ce que** le système porteur (6,7,9) commandé par ordinateur et destiné à recevoir, transporter et placer les coques inférieures (8) présente un moyen de transport (9) déplaçable en direction du support central (1).

9. Dispositif selon la revendication 5, 6 ou 8, **caractérisé en ce que** le support central (1) destiné à compenser des flexions permanentes dans la direction Z du grand support (14) ainsi que des variations dimensionnelles présente des éléments déplaçables et commandés par ordinateur.

10. Dispositif selon la revendication 9, **caractérisé en ce que** un système de mesure sans contact basé sur une technologie laser et destiné à repérer les flexions permanentes du support central (1) et des variations dimensionnelles.

11. Dispositif selon une des revendications 5, 6, 7, 8, 9 ou 10, **caractérisé en ce que** le support central (1) fait office de support pour les conduites d'alimentation, l'éclairage et les outils.
